# EUROPÄISCHE PATENTSCHRIFT

(11) **EP 3 715 556 B1**
(45) Veröffentlichungstag und Bekanntmachung des Hinweises auf die Patenterteilung: **17.07.2024**
(21) Anmeldenummer: 20162903.7
(22) Anmeldetag: 13.03.2020
(51) Int. Cl.: E04G 15/06, E04G 21/18, E04G 23/00, F16L 5/04, E04F 17/00

(54) **DECKENDURCHFÜHRUNGSVORRICHTUNG, INSTALLATIONSANORDNUNG UND INSTALLATIONSVERFAHREN**
COVER FEEDTHROUGH DEVICE, INSTALLATION ARRANGEMENT AND INSTALLATION METHOD
DISPOSITIF DE TRAVERSÉE DE PLAFOND, SYSTÉME D'INSTALLATION ET PROCÉDÉ D'INSTALLATION

(30) Priorität: 27.03.2019 DE 102019107862
(43) Veröffentlichungstag der Anmeldung: 30.09.2020
(73) Patentinhaber: I.C.B. Innovations-Center-Bad GmbH & Co. KG, 33181 Bad Wünnenberg (DE)
(72) Erfinder:
(74) Vertreter: Wickord, Wiro

(56) Entgegenhaltungen:
- DE-A1- 10 108 316
- DE-A1- 19 710 789
- GB-A- 2 212 187
- JP-A- H07 224 973
- US-A- 4 669 759

## Beschreibung

Die Erfindung betrifft eine Deckendurchführungsvorrichtung für eine Geschossdecke, insbesondere für eine Geschossdecke in einem mehrgeschossigen Wohngebäude mit einer Mehrzahl an Etagenwohnungen. Ferner betrifft die Erfindung eine Installationsanordnung mit einer Deckendurchführungsvorrichtung sowie ein Installationsverfahren hierfür.

Bei der Gebäudesanierung beziehungsweise -modernisierung werden etwa im Rahmen der Heizungsmodernisierung, der energetischen Sanierung oder der Badsanierung häufig der Versorgung beziehungsweise Entsorgung dienende Rohrleitungen erneuert. Die Erneuerung dieser Rohrleitungen erfolgt heute konventionell auf handwerkliche Art und Weise. Die Rohrleitungen werden dabei baustellenseitig modernisiert. Insbesondere bei mehrgeschossigen Wohngebäuden mit übereinanderliegenden Etagenwohnungen ist der Modernisierungsaufwand hierbei erheblich mit der Folge, dass die Modernisierung arbeitsaufwändig und zeitintensiv ist. Darüber hinaus müssen bei der geschossübergreifenden Modernisierung vertikaler Rohrleitungen Sicherheitsvorgaben, beispielsweise in Bezug auf den Brandschutz, während der Modernisierung erfüllt werden.

Deckendurchführungsvorrichtungen der gattungsgemäßen Art sind beispielsweise aus der JP H07 224973 A und der US 4 669 759 A bekannt.

Aufgabe der vorliegenden Erfindung ist es, die Erstinstallation und/oder Modernisierung von insbesondere vertikal erstreckten, der Versorgung beziehungsweise Entsorgung dienenden Rohrleitungen in mehrgeschossigen Gebäuden zu vereinfachen.

Zur Lösung der Aufgabe weist die Erfindung die Merkmale des Patentanspruchs 1 auf. Demzufolge ist eine werksseitig vorgefertigte Deckendurchführungsvorrichtung für eine Geschossdecke vorgesehen, welche eine Rohrleitung mit einem ersten Anschlussabschnitt und mit einem zweiten Anschlussabschnitt sowie ein die Rohrleitung jedenfalls abschnittsweise umgreifendes Schallisolationsmittel und/oder Wärmedämmmittel und/oder Feuerdurchtrittsschutzmittel umfasst. Das Schallisolationsmittel und/oder das Wärmedämmmittel und/oder das Feuerdurchtrittsschutzmittel sind - bezogen auf eine Längserstreckungsrichtung der Rohrleitung - zwischen dem ersten Anschlussabschnitt und dem zweiten Anschlussabschnitt angeordnet. Die erfindungsgemäße Deckendurchführungsvorrichtung umfasst ferner einen die Rohrleitung zwischen dem ersten Anschlussabschnitt und dem zweiten Anschlussabschnitt umgreifenden Anlagekörper mit einer ebenen, dem ersten Anschlussabschnitt der Rohrleitung zugewandten Anlagefläche. Der Anlagekörper ist aus einem feuerfesten Werkstoff und bevorzugt aus einem mineralischen feuerfesten Werkstoff gebildet.

Der besondere Vorteil der Erfindung besteht darin, dass beim Neubau und der Modernisierung von Gebäuden die Installationsarbeiten an den Rohrleitungen unter Verwendung einer werksseitig vorgefertigten Deckendurchführungsvorrichtung erfolgen. Infolge der werksseitigen Vorfertigung der Deckendurchführungsvorrichtung kann diese kostengünstig und in gleichbleibender Qualität hergestellt und zur Montage an die Baustelle geliefert werden. Die Deckendurchführungsvorrichtung sieht hierbei bereits ab Werk Wärmedämmmittel, Schallschutzmittel und/oder Feuerdurchtrittsschutzmittel vor. Der baustellenseitige Montageaufwand reduziert sich hierdurch. Überdies können die Wärmedämmmittel, die Schallschutzmittel und die Feuerdurchtrittsschutzmittel bei der werksseitigen Herstellung der Deckendurchtrittsvorrichtung in gleichbleibend hoher Qualität montiert und einer ganzheitlichen Qualitätsprüfung unterzogen werden. Der Anlagekörper mit der eben ausgebildeten Anlagefläche dient der Positionierung und Ausrichtung der Deckendurchführungsvorrichtung während der Montage. Die werksseitig vorgefertigte Deckendurchführungsvorrichtung kann insofern vor Ort auf der Baustelle schnell und exakt positioniert und montiert werden. Die erfindungsgemäße Deckendurchführungsvorrichtung macht es möglich, einen gleichermaßen hohen Qualitätsmaßstab in Bezug auf die Wärmedämmung, den (Körper-) Schallschutz und/oder den Brandschutz zu realisieren. Die Wärmedämmung, der Schallschutz und/oder der Brandschutz können getrennt durch verschieden Bauelemente realisiert sein. Ebenfalls kann ein Bauelement mehrere oder alle der genannten Funktionen realisieren.

Die erfindungsgemäße Deckendurchführungsvorrichtung kann beispielsweise beim Neubau von mehrgeschossigen Wohn- und Geschäftshäusern im Rahmen der Herstellung beziehungsweise Installation der Versorgungs- und Entsorgungsrohrleitungen verwendet werden. Beispielsweise können im Rahmen der Modernisierung von Gebäuden vorhandene Versorgungs- und Entsorgungsrohrleitungen ersetzt werden. Hierbei kann dann die erfindungsgemäße Deckendurchführungsvorrichtung zum Einsatz kommen mit der Folge, dass die Modernisierung vor Ort sehr schnell erfolgen und die Beeinträchtigung der Bewohner beziehungsweise Nutzer des Gebäudes begrenzt werden kann.

Die Installations- und Montageaufwand reduziert sich durch die Verwendung der werksseitig vorgefertigten Deckendurchführungsvorrichtung sowohl beim Neubau als auch bei der Modernisierung von Gebäuden. Mithin können angelernte Kräfte die Installationsarbeiten vor Ort durchführen beziehungsweise unterstützen, während die werksseitige Vorfertigung der Deckendurchführungsvorrichtung durch Facharbeiter beziehungsweise ausgebildete Handwerker oder industriell erfolgt.

Nach der Erfindung sieht die Deckendurchführungsvorrichtung eine in die Längserstreckungsrichtung der Rohrleitung orientierte Montageschiene vor. An der Montageschiene sind die Rohrleitung und/oder das Schallschutzmittel und/oder das Wärmedämmmittel und/oder das Feuerdurchtrittsschutzmittel und/oder der Anlagekörper gehalten. Vorteilhaft kann durch das Vorsehen der Montageschiene die mechanische Stabilität der

Deckendurchführungsvorrichtung verbessert werden. Es vereinfacht sich hierdurch die werksseitige Fertigung ebenso wie der Transport und die baustellenseitige Montage der Deckendurchführungsvorrichtung. Überdies kann die Montageschiene benutzt werden, um die Deckendurchführungsvorrichtung auf der Baustelle nach der Positionierung beziehungsweise Ausrichtung derselben festzulegen. Beispielsweise wird die Deckendurchführungsvorrichtung mittels der Montageschiene an einer Gebäudewand festgelegt. Der Montageschiene können hierzu Befestigungsmittel, beispielsweise Schrauben, zugeordnet sein. Zur Aufnahme der Befestigungsmittel können in der Montageschiene Bohrungen oder andere Aufnahmemittel für die Befestigungsmittel vorgesehen sein.

Nach einer Weiterbildung der Erfindung ist die Montageschiene aus einem metallischen Werkstoff gebildet. Insbesondere ist die Montageschiene parallel zu der Rohrleitung angeordnet beziehungsweise in die Längserstreckungsrichtung derselben orientiert. Die Montageschiene ist bevorzugt zweiteilig ausgebildet. Dabei können ein erster Montageschienenteil und ein zweiter Montageschienenteil zueinander beabstandet angeordnet sein. Zwischen dem ersten Montageschienenteil und dem zweiten Montageschienenteil kann eine Schmelzsicherung aus einem nicht feuerfesten Werkstoff vorgesehen sein. Vorteilhaft kann durch die Realisierung der Montageschiene aus einem metallischen Werkstoff sowie die zweiteilige Gestaltung und das Vorsehen der Schmelzsicherung ein besonders wirksamer Feuerschutz realisiert werden. Sofern auf einer Etage des mehrgeschossigen Gebäudes ein Feuer ausbricht, erwärmt sich die metallische Montageschiene. Da die Montageschiene jedoch unterbrochen ist und die Schmelzsicherung aus einem nicht feuerfesten Werkstoff besteht, ist der Wärmeübertragung in die benachbarte Etage entgegengewirkt.

Nach einer Weiterbildung der Erfindung ist die Schmelzsicherung - bezogen auf die Längserstreckungsrichtung der Rohrleitung - auf Höhe des Feuerdurchtrittsschutzmittels und/oder des Wärmedämmmittels vorgesehen. Vorteilhaft wird hierdurch eine weiter verbesserte Feuerschutzfunktion für die Deckendurchführungsvorrichtung bereitgestellt. Es ist - bezogen auf die Rohrleitung und die hierzu benachbarte Montageschiene - eine Feuerschutzebene gebildet, welche dem Wärmedurchtritt zwischen den benachbarten Etagen im Falle eines Feuers entgegenwirkt.

Nach einer Weiterbildung der Erfindung ist als Feuerdurchtrittsschutzmittel für die Rohrleitung eine unter der Einwirkung von Hitze aufquellende Sicherungsmanschette beziehungsweise eine verschließbare Lüftungsklappe vorgesehen.

Die Sicherungsmanschette ist als Rohrschott realisiert. Sie ist so ausgebildet, dass im Brandfall und unter der Einwirkung von Wärme ein Rohrquerschnitt von der Sicherungsmanschette verschlossen und der Durchtritt des Feuers beziehungsweise Rauch verhindert wird. Insbesondere kommt die Sicherungsmanschette bei Rohrleitungen aus Kunststoff, beispielsweise bei Kunststoff-Schmutzwasserrohrleitungen oder bei Kunststoff-Regenwasserrohrleitungen, zum Einsatz.

Die verschließbare Lüftungsklappe ist insbesondere in Lüftungsrohrleitungen vorgesehen zum Verschließen des Rohrquerschnitts im Brandfall. Die als Deckenschott verwendete Lüftungsklappe verhindert hierbei wirksam, dass Feuer und Rauch im Brandfall über die Lüftungsanlage sich etagenübergreifend ausbreiten. Beispielsweise kann die Lüftungsklappe einen Temperatursensor aufweisen und sich temperaturabhängig im Brandfall selbsttätig verschließen.

Nach einer Weiterbildung der Erfindung ist die Anlagefläche des Anlagekörpers senkrecht zu der Längserstreckungsrichtung der Rohrleitung orientiert. Der Anlagekörper hat - bezogen auf einen Querschnitt senkrecht zu der Längserstreckungsrichtung der Rohrleitung - bevorzugt eine rechteckige und insbesondere eine quadratische oder eine kreisförmige Außengeometrie. Vorteilhaft kann durch die regelmäßige Gestaltung des Anlagekörpers und die senkrechte Orientierung der Anlagefläche zur Längserstreckungsrichtung die Montage der erfindungsgemäßen Deckendurchführungsvorrichtung weiter vereinfacht werden. Die Anlagefläche kann parallel zu einer Erstreckungsrichtung der Geschossdecke vorgesehen werden mit der Folge, dass die Rohrleitung senkrecht zur Geschossdecke erstreckt ist.

Nach einer Weiterbildung der Erfindung dient das Feuerdurchtrittsschutzmittel und/oder das Wärmedämmmittel und/oder das Schallisolationsmittel zugleich als Anlagekörper. Vorteilhaft ergibt sich hierdurch eine besonders kompakte Bauform der erfindungsgemäßen Deckendurchführungsvorrichtung. Die ebene Anlagefläche der Deckendurchführungsvorrichtung wird insofern ebenfalls von dem Schallisolationsmittel, dem Wärmedämmmittel beziehungsweise dem Feuerdurchtrittsschutzmittel bereitgestellt.

Nach einer Weiterbildung der Erfindung ist als Schallisolationsmittel beziehungsweise als Wärmedämmmittel beziehungsweise als Feuerdurchtrittsschutzmittel eine Mineralwollummantelung und insbesondere eine Steinwollummantelung der Rohrleitung vorgesehen. Die Mineralwollummantelung kann kostengünstig hergestellt werden. Insbesondere bei metallischen Versorgungsrohrleitungen, beispielsweise Frischwasserrohrleitungen aus Edelstahl oder Kupfer, sowie speziellen Verbundstoffrohrleitungen können durch die Mineralwollummantelung der Übertritt eines Brands von einer Etage in die nächste verhindert und zugleich eine wirksame Wärmedämmung beziehungsweise Schallisolation bereitgestellt werden.

Zur Lösung der Aufgabe weist die Erfindung die Merkmale des Patentanspruchs 8 auf. Demzufolge umfasst eine Installationsanordnung insbesondere für ein mehrgeschossiges Wohngebäude mit Etagenwohnungen eine erfindungsgemäße Deckendurchführungsvorrichtung sowie eine mit dem ersten Anschlussabschnitt der Deckendurchführungsvorrichtung verbundene erste Anschlussleitung und eine mit dem zweiten Anschlussabschnitt der Deckendurchführungsvorrichtung verbundene zweite Anschlussrohrleitung. Die Deckendurchführungsvorrichtung ist dabei in einem Ausnehmungsbereich der Geschossdecke derart angeordnet, dass die Anlagefläche des Anschlusskörpers flächenbündig mit einer Unterseite der Geschossdecke angeordnet ist. Die Deckendurchführungsvorrichtung ist in dem Ausnehmungsbereich der Geschossdecke mit einem feuerfesten, aushärtbaren, mineralischen Vergusswerkstoff umgossen. Der Vergusswerkstoff ist bis an die Geschossdecke herangeführt. Im ausgehärteten Zustand legt er die Deckendurchführungsvorrichtung relativ zur Geschossdecke an ebendieser fest.

Der besondere Vorteil der Erfindung besteht darin, dass durch die erfindungsgemäße Installationsanordnung mit der Deckendurchführungsvorrichtung eine dem Brandschutz gerecht werdende Deckendurchführung bereitgestellt ist. Die Installationsanordnung kann hierbei kostengünstig hergestellt werden. Ein an der Geschossdecke hergestellter Ausnehmungsbereich als Deckendurchbruch wird nach der Positionierung und Ausrichtung der Deckendurchführungsvorrichtung mit dem Vergusswerkstoff geschlossen. Als Vergusswerkstoff kann beispielsweise Beton verwendet werden.

Die Deckendurchführungsvorrichtung ist durch den Einbau in die Geschossdecke fest mit dem Gebäude verbunden beziehungsweise statisch in das Gebäude eingebunden. Die Versorgungs- beziehungsweise Entsorgungsrohrleitungen können insofern selbsttragend ausgeführt werden. Auf eine zusätzliche Befestigung der Deckendurchführungsvorrichtung und/oder der Versorgungs- beziehungsweise Entsorgungsrohrleitungen kann verzichtet werden. Hierdurch ergeben sich insbesondere angesichts der durch Temperaturwechsel verursachten Längenänderungen der Versorgungs- beziehungsweise Entsorgungsrohrleitungen Vorteile.

Nach einer bevorzugten Ausführungsform der Erfindung umgreift der feuerfeste, aushärtbare, mineralische Vergusswerkstoff das Schallisolationsmittel beziehungsweise das Wärmedämmmittel beziehungsweise das Feuerdurchtrittsschutzmittel jedenfalls abschnittsweise. Vorteilhaft wird hierdurch eine besonders wirksame Schallisolation und insbesondere eine Körperschallisolation sowie ein besonders wirksamer Brandschutz realisiert. Das Schallisolationsmittel, das Wärmedämmmittel beziehungsweise das Feuerdurchtrittsschutzmittel liegen insofern geschützt und manipulationssicher im Bereich der durch den Vergusswerkstoff wieder geschlossenen Geschossdecke.

Nach einer Weiterbildung der Erfindung sind registerartig wenigstens zwei erfindungsgemäße Deckendurchführungsvorrichtungen benachbart zueinander angeordnet und mit entsprechenden Anschlussrohrleitungen verbunden. Die wenigstens zwei Deckendurchführungsvorrichtungen sind in einem gemeinsamen Ausnehmungsbereich angeordnet und gemeinsam mit dem feuerfesten, aushärtbaren und mineralischen Vergusswerkstoff umgossen. Vorteilhaft kann die Installationsanordnung besonders kompakt ausgebildet und der Montageaufwand für die Installation beziehungsweise Modernisierung der Rohrleitungen durch die Anordnung von mehreren Deckendurchführungsvorrichtungen an einem gemeinsamen Ausnehmungsbereich weiter reduziert werden.

Zur Lösung der Aufgabe weist die Erfindung die Merkmale des Patentanspruchs 12 auf. Demzufolge ist ein Installationsverfahren für eine Installationsanordnung mit den folgenden Verfahrensschritten vorgesehen:
- Herstellen eines Ausnehmungsbereichs als Deckendurchbruch an einer vorhandenen Geschossdecke;
- Anbringen einer den Ausnehmungsbereich überdeckenden Schalung an einer Unterseite der Geschossdecke;
- Herstellen einer Durchführungsöffnung an der Schalung;
- Einsetzen einer erfindungsgemäßen Deckendurchführungsvorrichtung in den Ausnehmungsbereich derart, dass der erste Anschlussabschnitt der Deckendurchführungsvorrichtung durch die Durchführungsöffnung der Schalung hindurchgeführt ist und der Anlagekörper der Deckendurchführungsvorrichtung mit der Anlagefläche an einer der Geschossdecke zugewandten oberen Flachseite der Schalung angelegt ist;
- Anschließen einer ersten Anschlussrohrleitung an den ersten Anschlussabschnitt der Deckendurchführungsvorrichtung und/oder Anschließen einer zweiten Anschlussrohrleitung an einen zweiten Anschlussabschnitt der Deckendurchführungsvorrichtung;
- Umgießen der Deckendurchführungsvorrichtung im Ausnehmungsbereich mit einem feuerfesten, aushärtbaren, mineralischen Vergusswerkstoff;
- Entfernen der Schalung nach dem Aushärten des Vergusswerkstoffs.

Der besondere Vorteil der Erfindung besteht darin, dass die Installation beziehungsweise Modernisierung der bevorzugt vertikal orientierten Versorgungsbeziehungsweise Entsorgungsrohrleitungen insbesondere in einem mehrgeschossigen Gebäude, beispielsweise in einem mehrgeschossigen Wohngebäude mit übereinanderliegenden Etagenwohnungen, durch die Verwendung einer vorgefertigten Deckendurchführungsvorrichtung erheblich vereinfacht werden kann. Es wird insofern an der Geschossdecke ein Ausnehmungsbereich als Deckendurchbruch hergestellt. Der Deckendurchbruch wird von unten mit der Schalung verschlossen. Hierdurch ist sichergestellt, dass im Rahmen der Installationsarbeiten nicht versehentlich Werkzeug oder Baumaterial von einer oberen Etage in eine darunterliegende untere Etage herabfällt und in der unteren Etage Personen oder Baumaterial zu Schaden kommen. Zudem kann die Schalung aus einem feuerfesten Material hergestellt werden, so dass bereits während der Installationsphase eine verbesserte Brandschutzwirkung bereitgestellt ist.

An der Schalung wird im Rahmen der Montage der Deckendurchführungsvorrichtung eine Durchführungsöffnung hergestellt. Ein Querschnitt der Durchführungsöffnung ist dabei so bemessen, dass der erste Anschlussabschnitt der Deckendurchführungsvorrichtung durch die Durchführungsöffnung hindurchgeführt werden kann. Zugleich wird die Deckendurchführungsöffnung von dem Anlagekörper verschlossen, der mit der ebenen Anlagefläche von oben an die Schalung angelegt wird. Sofern nun nach dem Anschluss der Anschlussrohrleitungen an die Anschlussabschnitte der Deckendurchführungsvorrichtung und der abschließenden Positionierung beziehungsweise Ausrichtung der Deckendurchführungsvorrichtung der Ausnehmungsbereich vergossen wird, kann der noch flüssige Vergusswerkstoff nicht durch die Deckendurchführungsöffnung hindurchtreten. Es ist insofern sichergestellt, dass der Ausnehmungsbereich mit einem minimalen Materialaufwand sauber verschlossen werden kann.

Nach dem Aushärten des feuerfesten mineralischen Vergusswerkstoffs wird die Schalung entfernt. Die Geschossdecke ist dann durch den Vergusswerkstoff wieder geschlossen.

In Bezug auf die Realisierung der verschiedenen Arbeitsschritte ist es besonders vorteilhaft, zunächst die Anschlussrohrleitungen an die Anschlussabschnitte der Deckendurchführungsvorrichtung anzusetzen und dann die Deckendurchführungsvorrichtung im Ausnehmungsbereich mit dem feuerfesten, aushärtbaren, mineralischen Vergusswerkstoff zu umgießen. Die Deckendurchführungsvorrichtung kann insofern beim Anschließen der Anschlussrohrleitungen noch exakt ausgerichtet beziehungsweise verschoben und bewegt werden. Der Verguss wird dann hergestellt, nachdem die Anschlussrohrleitungen an die Deckendurchführungsvorrichtungen angeschlossen sind und ein Strang der herzustellenden Rohrleitung insgesamt montiert ist.

Nach einer Weiterbildung der Erfindung wird zunächst die Schalung von unten an die Geschossdecke angebracht und dann die Durchführungsöffnung an der Schalung hergestellt. Vorteilhaft kann durch das nachträgliche Herstellen der Durchführungsöffnung deren Lage toleranzarm gewählt beziehungsweise die Deckendurchführungsvorrichtung besonders exakt positioniert werden.

Aus den weiteren Unteransprüchen und der nachfolgenden Beschreibung sind weitere Vorteile, Merkmale und Einzelheiten der Erfindung zu entnehmen.

Die Zeichnungen dienen lediglich beispielhaft der Klarstellung der Erfindung und haben keinen einschränkenden Charakter. Es zeigen:
- Fig. 1: eine Vorderseitenansicht einer ersten Ausführungsform einer erfindungsgemäßen Deckendurchführungsvorrichtung für eine Schmutzwasserrohrleitung,
- Fig. 2: eine Teilansicht einer Rückseite der Deckendurchführungsvorrichtung nach Fig. 1,
- Fig. 3: eine Vorderseitenansicht einer Montageschiene der Deckendurchführungsvorrichtung nach den Fig. 1 und 2,
- Fig. 4: eine Seitenansicht der Montageschiene nach Fig. 3,
- Fig. 5: eine Rückseitenansicht der Montageschiene nach Fig. 3,
- Fig. 6: eine Vorderseitenansicht einer zweiten Ausführungsform der erfindungsgemäßen Deckendurchführungsvorrichtung für eine Lüftungsrohrleitung,
- Fig. 7: eine Rückseitenansicht der Deckendurchführungsvorrichtung nach Fig. 6,
- Fig. 8: eine Vorderseitenansicht einer dritten Ausführungsform der erfindungsgemäßen Deckendurchführungsvorrichtung für eine Frischwasserrohrleitung,
- Fig. 9: eine Teilansicht einer Rückseite der Deckendurchführungsvorrichtung nach Fig. 8,
- Fig. 10: eine Vorderseitenansicht einer vierten Ausführungsform der erfindungsgemäßen Deckendurchführungsvorrichtung für eine Regenwasserrohrleitung,
- Fig. 11: eine Teilansicht einer Rückseite der Deckendurchführungsvorrichtung nach Fig. 10,
- Fig. 12: eine Aufsicht auf eine erfindungsgemäße Installationsanordnung mit vier einander registerartig zugeordneten Deckendurchführungsvorrichtungen und
- Fig. 13: einen Schnitt A-A durch die Installationsanordnung nach Fig. 12.

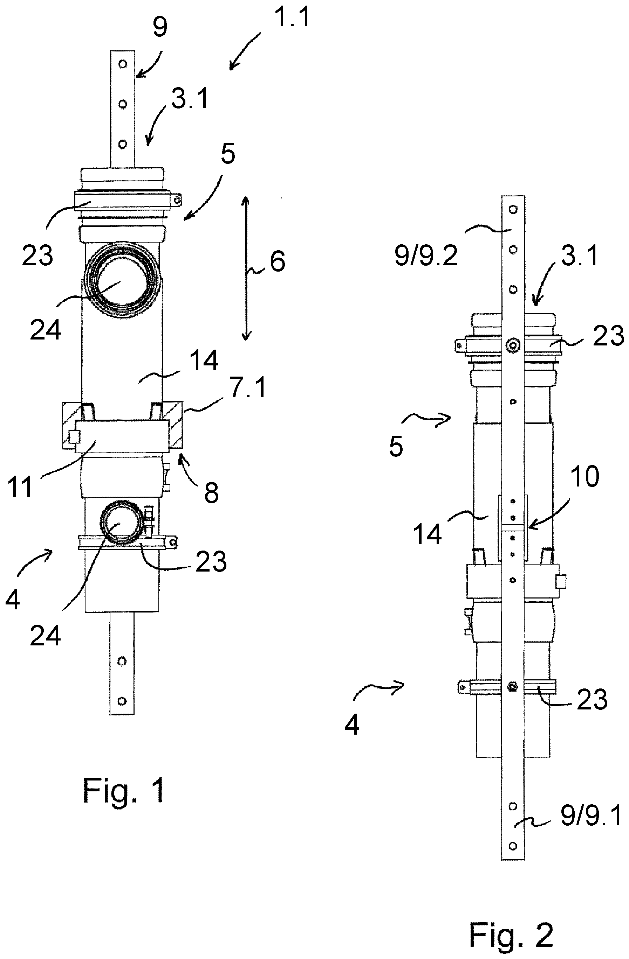

Eine erste Ausführungsform einer erfindungsgemäßen Deckendurchführungsvorrichtung 1.1 nach den Fig. 1 und 2 umfasst eine Schmutzwasserrohrleitung 3.1, welche sich in eine Längserstreckungsrichtung 6 erstreckt, mit einem ersten Anschlussabschnitt 4 und einem zweiten Anschlussabschnitt 5. Zwischen dem ersten Anschlussabschnitt 4 und dem zweiten Anschlussabschnitt 5 ist in einem mittleren Abschnitt der Schmutzwasserrohrleitung 3.1 ein die Rohrleitung 3.1 umgreifender Anlagekörper 7.1 vorgesehen. Ebenfalls ist in dem mittleren Abschnitt der Schmutzwasserrohrleitung 3.1 eine sich unter der Einwirkung von Hitze aufquellende Sicherungsmanschette 11 als ein Feuerdurchtrittsschutzmittel der erfindungsgemäßen Deckendurchführungsvorrichtung 1.1 angeordnet. Die Sicherungsmanschette 11 wird von dem Anlagekörper 7.1 wie die Rohrleitung 3.1 mantelseitig abschnittsweise umgriffen. Sie ist so ausgebildet, dass in einem Normalbetriebszustand das Schmutzwasser durch die Schmutzwasserrohrleitung 3.1 fließen kann und ein Rohrquerschnitt der Schmutzwasserrohrleitung 3.1 nicht oder nur geringfügig reduziert ist im Bereich der Sicherungsmanschette 11. Unter der Einwirkung von Hitze quillt die Sicherungsmanschette 11 auf und verschließt den Rohrquerschnitt der Schmutzwasserrohrleitung 3.1 mit der Folge, dass einem Durchtritt von Flammen beziehungsweise Rauch entgegengewirkt ist.

Die Schmutzwasserrohrleitung 3.1 weist in dem mittleren Abschnitt und im den zweiten Anschlussabschnitt 5 eine Schallschutzummantelung 14 auf. Die Schallschutzummantelung 14 dämmt die Rohrleitung 3.1 und sorgt insbesondere bei Mehrfamilienhäusern mit übereinanderliegenden Etagenwohnungen dafür, dass eine schalltechnische Entkopplung der Etagenwohnungen von der Schmutzwasserrohrleitung 3.1 beim Durchfluss derselben mit Schmutzwasser realisiert ist. Auf Wärmedämmmittel verzichtet die erste Ausführungsform der Deckendurchführungsvorrichtung 1.1. Bis zu einem gewissen Grad übernimmt die Schallschutzummantelung 14 diese Funktion. Darüber hinausgehende Maßnahmen sind für die Schmutzwasserrohrleitung 3.1 nicht erforderlich.

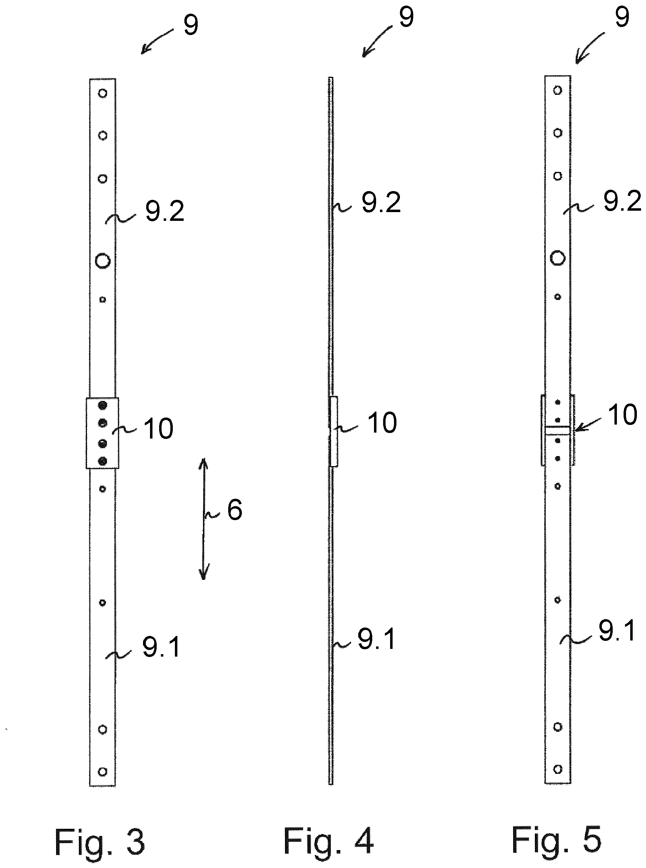

Die Rohrleitung 3.1 ist in dem ersten Anschlussabschnitt 4 sowie in dem zweiten Anschlussabschnitt 5 über je eine Befestigungsschelle 23 an einer Montageschiene 9 gehalten. Die Montageschiene 9 gibt der erfindungsgemäßen Deckendurchführungsvorrichtung 1.1 Stabilität. Sie ist insbesondere zweiteilig ausgebildet, mit einem ersten Montageschienenteil 9.1 und einem zweiten Montageschienenteil 9.2. Die beiden Montageschienenteile 9.1, 9.2 sind zueinander in die Längserstreckungsrichtung 6 der Schmutzwasserrohrleitung 3.1 beabstandet. Zur Verbindung der Montageschienenteile 9.1, 9.2 ist zwischen denselben eine Schmelzsicherung 10 vorgesehen, vgl. Fig. 3 bis 5. Sofern im Brandfall ein Teil der Montageschiene 9 sich erwärmt, schmilzt die Schmelzsicherung 10 infolge der Hitzeentwicklung und die Montageschiene 9 ist unterbrochen. Einer Temperaturübertragung von einem Teil der Montageschiene 9 auf den anderen ist hierdurch ebenso wie einem Übertritt des Brands von einer Etage auf die nächste entgegengewirkt.

Zur Verdeutlichung des konstruktiven Aufbaus der erfindungsgemäßen Deckendurchführungsvorrichtung 1.1 ist in Fig. 2 auf die Darstellung des Anlagekörpers 7.1 verzichtet. Der Anlagekörper 7.1 umgreift in der vorliegenden ersten Ausführungsform der Erfindung den ersten Montageschienenteil 9.1 der Montageschiene 9 ebenso wie die Schmelzsicherung 10 abschnittsweise.

Im Bereich des ersten Anschlussabschnitts 4 sieht die Schmutzwasserrohrleitung 3.1 einen ersten Zulauf 24 vor. Der Weiteren ist im Bereich des zweiten Anschlussabschnitts 5 ein weiterer Zulauf 24 für das Schmutzwasser vorgesehen. Über den in dem ersten Anschlussabschnitt 4 vorgesehenen ersten Zulauf 24 kann beispielsweise eine bodengleiche Dusche angeschlossen sein, während der weitere Zulauf 24 in dem zweiten Anschlussabschnitt 5 zum Anschluss einer Toilette und/oder eines Waschbeckens vorgesehen sein kann.

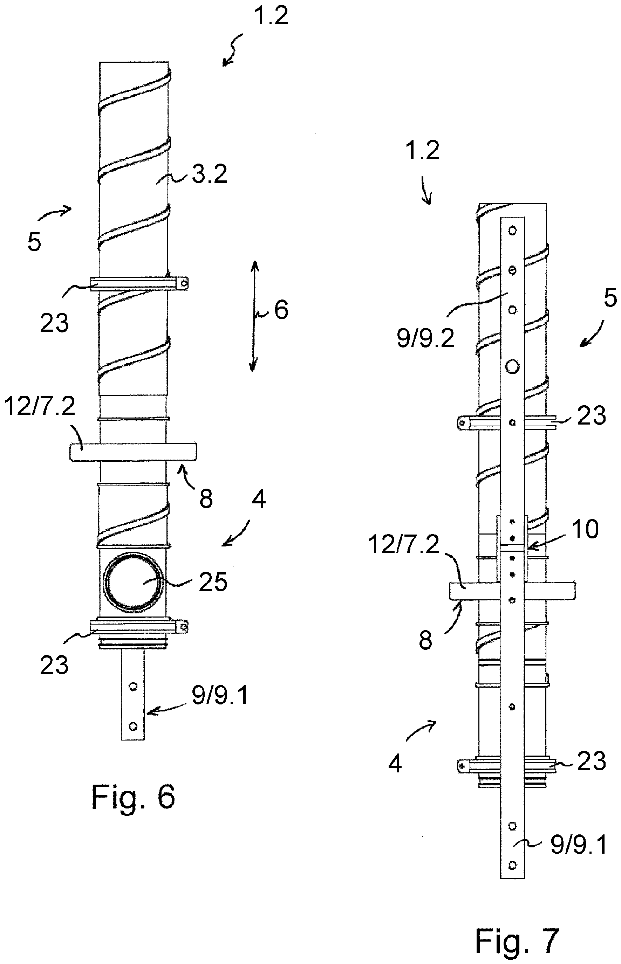

Die Figuren 6 und 7 zeigen eine zweite Ausführungsform der erfindungsgemäßen Deckendurchführungsvorrichtung 1.2. Die Deckendurchführungsvorrichtung 1.2 sieht eine Lüftungsrohrleitung 3.2 mit einem ersten Anschlussabschnitt 4 und einem zweiten Anschlussabschnitt 5 vor. In einem mittleren Abschnitt zwischen dem ersten Anschlussabschnitt 4 und dem zweiten Anschlussabschnitt 5 ist als Anlagekörper 7.2 der Deckendurchführungsvorrichtung 1 eine Lüftungsklappe 12, insbesondere ein Rauch- beziehungsweise Luftschott, vorgesehen. Der Anlagekörper 7.2 stellt die Anlagefläche 8 der Deckendurchführungsvorrichtung 1.2 zur Verfügung. Diese ist wie gehabt dem ersten Anschlussabschnitt 4 der Lüftungsrohrleitung 3.2 zugeordnet.

Im Bereich des ersten Anschlussabschnitts 4 ist ein Abluftanschluss 25 der Lüftungsrohrleitung 3.2 vorgesehen. Über den Abluftanschluss 25 kann eine Lüftungsanlage einer Etagenwohnung an die in die Längserstreckungsrichtung 6 orientierte und im verbauten Zustand bevorzugt vertikal orientierte Lüftungsrohrleitung 3.2 angeschlossen werden.

Fig. 7 zeigt, dass der Anlagekörper 7.2, der durch die Lüftungsklappe 12 definiert ist, weder die Montageschiene 9 beziehungsweise den ersten Montageschienenteil 9.1 noch die Schmelzsicherung 10 umschließt. Vielmehr ist die Lüftungsklappe 12 als Zukaufteil der Deckendurchführungsvorrichtung 1.2 realisiert. Die Lüftungsrohrleitung 3.2 ist vorliegend exemplarisch als Wickelfalzrohrleitung 3.2 aus einem bevorzugt metallischen Werkstoff hergestellt.

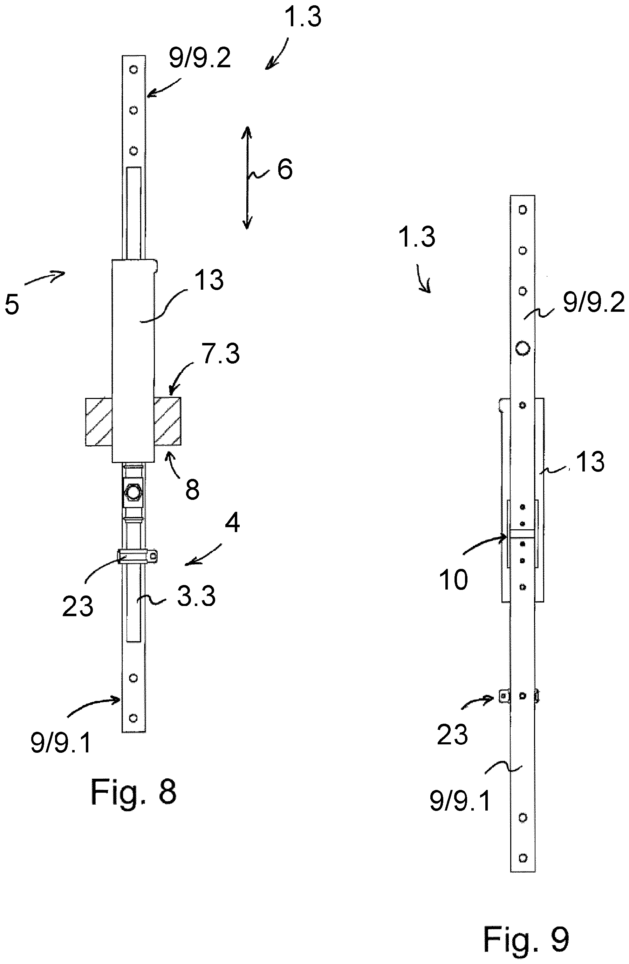

Eine dritte Ausführungsform der erfindungsgemäßen Deckendurchführungsvorrichtung 1.3 nach den Fig. 8 und 9 sieht eine in die Längserstreckungsrichtung 6 längserstreckte Frischwasserrohrleitung 3.3 vor, welche wie gehabt über Schellen 23 an der Montageschiene 9 befestigt ist. In dem zwischen dem ersten Anschlussabschnitt 4 und dem zweiten Anschlussabschnitt 5 vorgesehenen mittleren Abschnitt sieht die Rohrleitung 3.3 eine Mineralwollummantelung 13 vor. Die Mineralwollummantelung dient gleichermaßen als Wärmedämmmittel, Schallisolationsmittel und Feuerdurchtrittsschutzmittel für die Frischwasserrohrleitung 3.3. Sie ist von dem Anlagekörper 7.3 mantelseitig abschnittsweise umgriffen. Der Anlagekörper 7.3, auf dessen Darstellung in der Fig. 9 aus Klarheitsgründen verzichtet ist, umgreift die Frischwasserrohrleitung 3.3, die Mineralwollummantelung 13 sowie die Montageschiene 9 mit der Schmelzsicherung 10 abschnittsweise. Der Anlagekörper 7.3 weist wie gehabt die dem ersten Anschlussabschnitt 4 zugewandte ebene Anlagefläche 8 auf. Die Anlagefläche 8 ist senkrecht zur Längserstreckungsrichtung 6 der Frischwasserrohrleitung 3.3 orientiert.

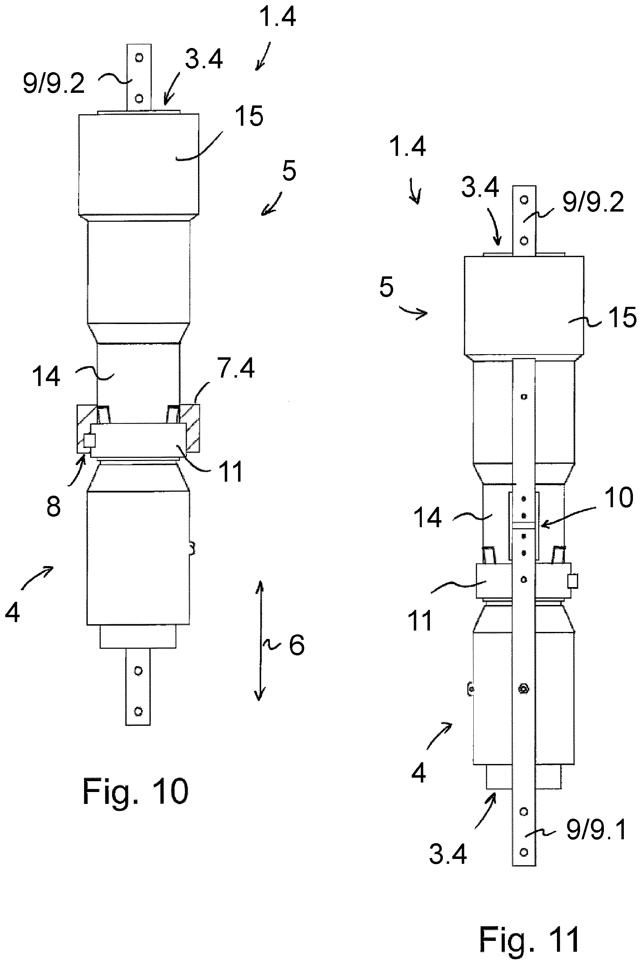

Nach einer vierten Ausführungsform der erfindungsgemäßen Deckendurchführungsvorrichtung 1.4 nach den Fig. 10 und 11 ist die Rohrleitung der Deckendurchführungsvorrichtung als eine Regenwasserrohrleitung 3.4 realisiert. Die Regenwasserrohrleitung 3.4 ist beispielsweise aus Kunststoff hergestellt. In dem mittleren Abschnitt der Deckendurchführungsvorrichtung 1.4 ist der Regenwasserrohrleitung 3.4 die Sicherungsmanschette 11 als Feuerdurchtrittsschutzmittel zugeordnet. Der Anlagekörper 7.4 umgibt in dem mittleren Abschnitt der Deckendurchführungsvorrichtung 1.4 die Regenwasserrohrleitung 3.4 sowie die Sicherungsmanschette 11 ebenfalls abschnittsweise. Überdies umgreift der Anlagekörper 7.4 eine der Regenwasserrohrleitung 3.4 im mittleren Bereich zugeordnete Schallschutzummantelung 14. Durch die Schallschutzummantelung 14 ist sichergestellt, dass in der Regenwasserrohrleitung 3.4 auftretende Schwingungen nicht in eine benachbarte Geschossdecke und weiter in die Etagenwohnungen übertragen und dort als störend empfunden werden. Zusätzlich sieht die Regenwasserrohrleitung 3.4 im ersten Anschlussabschnitt 4 sowie im zweiten Anschlussabschnitt 5 eine Schwitzwasserdämmung 15 vor.

Jeweils ist der Anlagekörper 7.1, 7.2, 7.3, 7.4 der erfindungsgemäßen Deckendurchführungsvorrichtung 1.1, 1.2, 1.3., 1.4 aus einem feuerfesten Werkstoff hergestellt. Für die erste Ausführungsform, die dritte Ausführungsform sowie die vierte Ausführungsform ist der Anlagekörper 7.1, 7.3, 7.4 bevorzugt aus einem mineralischen, feuerfesten Werkstoff, beispielsweise Beton, gebildet. In Bezug auf die Außengeometrie weist der Anlagekörper 7.1, 7.2, 7.3, 7.4 bevorzugt eine rechteckige und insbesondere quadratische oder kreisförmige Form quer zur Längserstreckungsrichtung 6 der Deckendurchführungsvorrichtung 1.1, 1.2, 1.3, 1.4 auf.

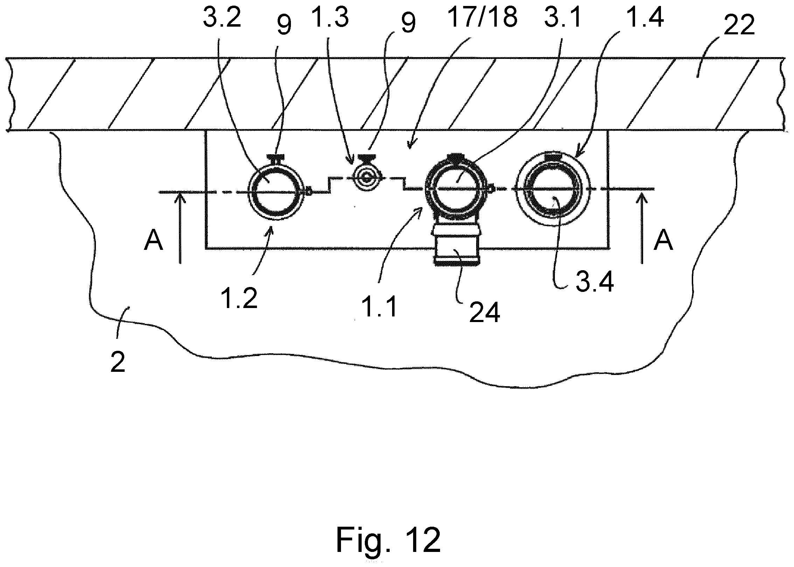

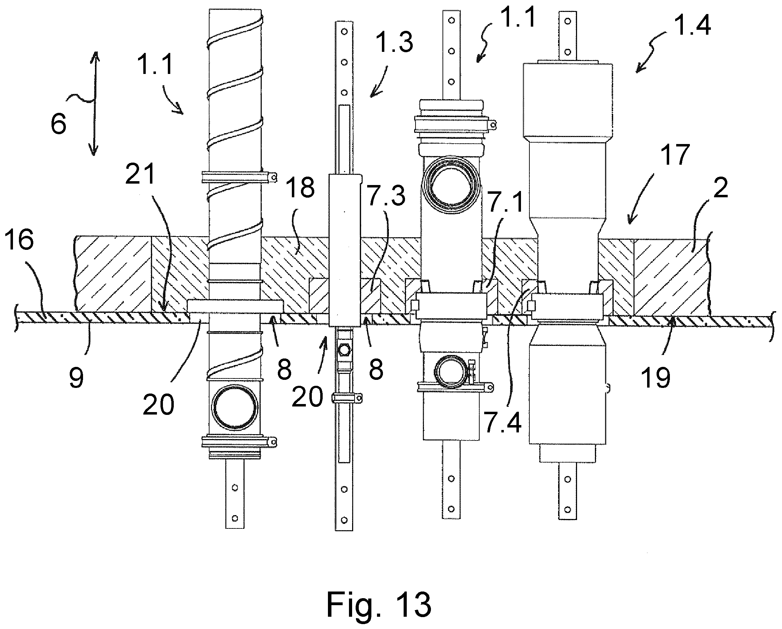

Die Fig. 12 und 13 zeigen eine erfindungsgemäße Installationsanordnung mit den vier vorstehend beschriebenen Deckendurchführungsvorrichtungen 1.1, 1.2, 1.3, 1.4. Die Deckendurchführungsvorrichtungen 1.1, 1.2, 1.3, 1.4 sind einander benachbart registerartig in einem gemeinsamen Ausnehmungsbereich 12 einer Geschossdecke 2 vorgesehen. Jeweils sind die Deckendurchführungsvorrichtungen 1.1, 1.2, 1.3, 1.4 mit der Anlagefläche 8 der Anlagekörper 7.1, 7.2, 7.3, 7.4 an eine obere Flachseite 21 einer Schalung 16 angelegt. Die Schalung 16 ist hierbei von unten an die Geschossdecke 2 angelegt. Sie überdeckt den Ausnehmungsbereich 17 der Geschossdecke 2.

Jeweils ist die Deckendurchführungsvorrichtung 1.1, 1.2, 1.3, 1.4 mit dem ersten Anschlussabschnitt 4 durch eine Durchführungsöffnung 20 geführt, welche an der Schalung 16 vorgesehen ist. Die Montageschienen 9 der Deckendurchführungsvorrichtungen 1.1, 1.2, 1.3, 1.4 sind zueinander parallel und fluchtend angeordnet und einer Gebäudewand 22 zugewandt. Beispielsweise kann vorgesehen sein, dass die Deckendurchführungsvorrichtungen 1.1, 1.2, 1.3, 1.4 an der Gebäudewand 22 festgelegt sind. Zu diesem Zweck können Befestigungsmittel, beispielsweise Schrauben und/oder Anker, vorgesehen werden. An den Befestigungsschienen 9 der Deckendurchführungsvorrichtungen 1.1, 1.2, 1.3, 1.4 sind zu diesem Zweck Durchgangsbohrungen vorgesehen, in die die Befestigungsmittel eingesetzt werden können.

Der Ausnehmungsbereich 17 wird nach dem Einsetzen, Positionieren und Ausrichten der Deckendurchführungsvorrichtungen 1.1, 1.2, 1.3, 1.4 mit einem feuerfesten, aushärtbaren und insbesondere mineralischen Vergusswerkstoff gefüllt. Durch das Auffüllen des Ausnehmungsbereichs 17 mit dem Vergusswerkstoff 18 werden die Deckendurchführungsvorrichtungen 1.1,1.2, 1.3, 1.4 im jeweiligen mittleren Abschnitt umgossen. Insofern sind die Rohrleitungen 3.1, 3.2, 3.3, 3.4, die Montageschiene 9, die Anlagekörper 7.1, 7.2, 7.3, 7.4 sowie die verschiedenen Schallisolationsmittel, Wärmedämmmittel und/oder Feuerdurchtrittsschutzmittel abschnittsweise von dem Vergusswerkstoff umhüllt. Der Vergusswerkstoff ist dabei bis an die Geschossdecke 2 herangeführt. Nach dem Aushärten des Vergusswerkstoffs 18 sind die Deckendurchführungsvorrichtungen 1.1, 1.2, 1.3, 1.4 insofern relativ zur Geschossdecke 2 an ebendieser festgelegt. Die Schalung 16, welche an einer Unterseite 19 der Geschossdecke 2 angelegt ist, kann nach dem Aushärten des Vergusswerkstoffs 18 entfernt werden.

Im Rahmen der Neuinstallation beziehungsweise Renovierung von Versorgungsbeziehungsweise Entsorgungsrohrleitungen in einem mehrgeschossigen Mehrfamilienhaus mit Etagenwohnungen können in einem zentralen Bereich, beispielsweise im Treppenhaus, übereinanderliegend Ausnehmungsbereiche 17 an den Geschossdecken 2 hergestellt werden. Die Ausnehmungsbereiche 17 werden dann temporär mit der Schalung 16 von unten verschlossen und es werden nach der Montage der Schalung 16 die Durchführungsöffnungen 20 an ebendieser hergestellt. In die Durchführungsöffnungen 20 werden die Deckendurchführungsvorrichtungen 1.1, 1.2, 1.3, 1.4 mit dem ersten Anschlussabschnitt 4 voran eingesetzt, positioniert und ausgerichtet. Anschließend werden die Anschlussrohrleitungen zwischen einander zugewandten Anschlussabschnitten 4, 5 der Deckendurchführungsvorrichtungen 1.1, 1.2, 1.3, 1.4 montiert.

Optional können die Deckendurchführungsvorrichtungen 1.1, 1.2, 1.3, 1.4 vor dem Herstellen des Vergusses an der Gebäudewand 22 festgelegt werden. Die Ausnehmungsbereiche 17 werden mit dem Vergusswerkstoff 18 gefüllt. Nach dem Aushärten des Vergusswerkstoffs 18 kann die Schalung 16 entfernt werden.

Die Schalung 16 wird während der Installation der Versorgungs- beziehungsweise Entsorgungsrohrleitungen die Aufgabe übernehmen, eine Trennung der Etagen zu realisieren. Es ist hierbei einem Herabfallen von Werkzeug beziehungsweise Baumaterialen vorgebeugt. Überdies kann die Schalung 16 aus einem feuerfesten Werkstoff hergestellt sein. Insofern dient die Schalung 16 während der Bauphase zugleich als Brandschutzmittel.

Gleiche Bauteile und Bauteilfunktionen sind durch gleiche Bezugszeichen gekennzeichnet.

## Patentansprüche

1. Werksseitig vorgefertigte Deckendurchführungsvorrichtung (1.1, 1.2, 1.3, 1.4) für eine Geschossdecke (2) umfassend eine Rohrleitung (3.1, 3.2, 3.3, 3.4) mit einem ersten Anschlussabschnitt (4) und mit einem zweiten Anschlussabschnitt (5), umfassend ein die Rohrleitung (3.1, 3.2, 3.3, 3.4) abschnittsweise umgreifendes Schallisolationsmittel und/oder ein die Rohrleitung (3.1, 3.2, 3.3, 3.4) abschnittsweise umgreifendes Wärmedämmmittel und/oder ein der Rohrleitung (3.1, 3.2, 3.3, 3.4) zugeordnetes Feuerdurchtrittsschutzmittel, wobei das Schallisolationsmittel und/oder das Wärmedämmmittel und/oder das Feuerdurchtrittsschutzmittel bezogen auf eine Längserstreckungsrichtung (6) der Rohrleitung (3.1, 3.2, 3.3, 3.4) zwischen dem ersten Anschlussabschnitt (4) und dem zweiten Anschlussabschnitt (5) angeordnet ist, und umfassend einen die Rohrleitung (3.1, 3.2, 3.3, 3.4) zwischen dem ersten Anschlussabschnitt (4) und dem zweiten Anschlussabschnitt (5) umgreifenden Anlagekörper (7.1, 7.2, 7.3, 7.4) mit einer ebenen, dem ersten Anschlussabschnitt (4) zugewandten Anlagefläche (8), wobei der Anlagekörper (7.1, 7.2, 7.3, 7.4) aus einem feuerfesten Werkstoff und bevorzugt aus einem mineralischen feuerfesten Werkstoff gebildet ist, **dadurch gekennzeichnet, dass** eine in die Längserstreckungsrichtung (6) der Rohrleitung (3.1, 3.2, 3.3, 3.4) orientierte Montageschiene (9) vorgesehen ist, an welcher die Rohrleitung (3.1, 3.2, 3.3, 3.4) und/oder das Schallisolationsmittel und/oder das Wärmedämmmittel und/oder das Feuerdurchtrittsschutzmittel und/oder der Anlagekörper (7.1, 7.2, 7.3, 7.4) gehalten sind.

2. Deckendurchführungsvorrichtung (1.1, 1.2, 1.3, 1.4) nach Anspruch 1, **dadurch gekennzeichnet, dass** die Montageschiene (9) aus einem metallischen Werkstoff gebildet ist und/oder zweiteilig ausgebildet ist und/oder parallel zu der Rohrleitung (3.1, 3.2, 3.3, 3.4) angeordnet ist.

3. Deckendurchführungsvorrichtung (1.1, 1.2, 1.3, 1.4) nach Anspruch 2, **dadurch gekennzeichnet, dass** ein erster Montageschienenteil (9.1) der Montageschiene (9) und ein zweiter Montageschienenteil (9.2) der Montageschiene (9) zueinander beabstandet vorgesehen sind und dass zwischen dem ersten Montageschienenteil (9.1) und dem zweiten Montageschienenteil (9.2) eine Schmelzsicherung (10) vorgesehen ist aus einem nicht feuerfesten Werkstoff.

4. Deckendurchführungsvorrichtung (1.1, 1.2, 1.3, 1.4) nach Anspruch 3, **dadurch gekennzeichnet, dass** die Schmelzsicherung (10) bezogen auf die Längserstreckungsrichtung (6) der Rohrleitung (3.1, 3.2, 3.3, 3.4) auf Höhe des Schallisolationsmittels und/oder des Wärmedämmmittels und/oder des Feuerdurchtrittsschutzmittels vorgesehen ist und/oder dass eine sich unter der Einwirkung von Hitze aufquellende Sicherungsmanschette (11) und/oder eine verschließbare Lüftungsklappe (12) als Feuerdurchtrittsschutzmittel vorgesehen ist.

5. Deckendurchführungsvorrichtung (1.1, 1.2, 1.3, 1.4) nach einem der Ansprüche 1 bis 4, **dadurch gekennzeichnet, dass** die Anlagefläche (8) des Anlagekörpers (7.1, 7.2, 7.3, 7.4) senkrecht zur Längserstreckungsrichtung (6) te der Rohrleitung (3.1, 3.2, 3.3, 3.4) orientiert ist und/oder dass der Anlagekörper (7.1, 7.2, 7.3, 7.4) das Schallisolationsmittel und/oder das Wärmedämmmittel und/oder das Feuerdurchtrittsschutzmittel jedenfalls abschnittsweise umgreift.

6. Deckendurchführungsvorrichtung (1.1, 1.2, 1.3, 1.4) nach einem der Ansprüche 1 bis 5, **dadurch gekennzeichnet, dass** eine Mineralwollummantelung (13) und insbesondere eine Steinwollummantelung als Schallisolationsmittel und/oder als Wärmedämmmittel und/oder als Feuerdurchtrittsschutzmittel vorgesehen ist.

7. Deckendurchführungsvorrichtung (1.1, 1.2, 1.3, 1.4) nach einem der Ansprüche 1 bis 6, **dadurch gekennzeichnet, dass** die Rohrleitung (3.1, 3.2, 3.3, 3.4) als eine Schmutzwasserrohrleitung (3.1) und/oder als eine Lüftungsrohrleitung (3.2) und/oder als eine Frischwasserrohrleitung (3.3) und/oder als eine Regenwasserrohrleitung (3.4) und/oder als eine Heizungsvorlaufrohrleitung und/oder als eine Heizungsrücklaufrohrleitung ausgebildet ist.

8. Installationsanordnung insbesondere für ein mehrgeschossiges Wohngebäude mit Etagenwohnungen umfassend eine Deckendurchführungsvorrichtung (1.1, 1.2, 1.3, 1.4) nach einem der Ansprüche 1 bis 7, umfassend eine mit dem ersten Anschlussabschnitt (4) der Deckendurchführungsvorrichtung (1.1, 1.2, 1.3, 1.4) verbundene erste Anschlussrohrleitung und umfassend eine mit dem zweiten Anschlussabschnitt (5) der Deckendurchführungsvorrichtung (1.1, 1.2, 1.3, 1.4) verbundene zweite Anschlussrohrleitung, wobei die Deckendurchführungsvorrichtung (1.1, 1.2, 1.3, 1.4) in einem Ausnehmungsbereich (17) der Geschossdecke (2) derart angeordnet ist, dass die Anlagefläche (8) des Anlagekörpers (7.1, 7.2, 7.3, 7.4) der Deckendurchführungsvorrichtung (1.1, 1.2, 1.3, 1.4) flächenbündig angeordnet ist mit einer Unterseite (19) der Geschossdecke (2), und wobei die Deckendurchführungsvorrichtung (1.1, 1.2, 1.3, 1.4) in dem Ausnehmungsbereich (17) der Geschossdecke (2) mit einem feuerfesten, aushärtbaren und mineralischen Vergusswerkstoff (18) umgossen ist, der bis an die Geschossdecke (2) herangeführt ist und der im ausgehärteten Zustand die Deckendurchführungsvorrichtung (1.1, 1.2, 1.3, 1.4) relativ zur Geschossdecke (2) an ebendieser festlegt.

9. Installationsanordnung nach Anspruch 8, **dadurch gekennzeichnet, dass** der feuerfeste, aushärtbare, mineralische Vergusswerkstoff (18) das Schallisolationsmittel und/oder das Wärmedämmmittel und/oder das Feuerdurchtrittsschutzmittel jedenfalls abschnittsweise umgreift.

10. Installationsanordnung nach Anspruch 8 oder 9, **dadurch gekennzeichnet, dass** die Deckendurchführungsvorrichtung (1.1, 1.2, 1.3, 1.4) eine Montageschiene (9) umfasst und/oder dass die Montageschiene (9) über Befestigungsmittel an einer Gebäudewand (22) befestigt ist.

11. Installationsanordnung nach einem der Ansprüche 8 bis 10, **dadurch gekennzeichnet, dass** registerartig wenigstens zwei Deckendurchführungsvorrichtungen (1.1, 1.2, 1.3, 1.4) benachbart zueinander angeordnet und mit entsprechenden Anschlussrohrleitungen verbunden sind, wobei die wenigstens zweite Deckendurchführungsvorrichtung (1.1, 1.2, 1.3, 1.4) in einem gemeinsamen Ausnehmungsbereich (17) angeordnet und gemeinsam mit dem feuerfesten, aushärtbaren und mineralischen Vergusswerkstoff (18) umgossen sind.

12. Installationsverfahren für eine Installationsanordnung nach einem der Ansprüche 8 bis 11, umfassend die folgenden Schritte:
- Herstellen eines Ausnehmungsbereichs (17) als Deckendurchbruch in einer vorhandenen Geschossdecke (2);
- Anbringen einer den Ausnehmungsbereich (17) übergreifenden Schalung (16) an einer Unterseite (19) der Geschossdecke (2);
- Herstellen einer Durchführungsöffnung (20) an der Schalung (16);
- Einsetzen einer Deckendurchführungsvorrichtung nach einem der Ansprüche 1 bis 7 in den Ausnehmungsbereich (17) derart, dass der erste Anschlussabschnitt (4) der Deckendurchführungsvorrichtung (1.1, 1.2, 1.3, 1.4) durch die Durchführungsöffnung (20) hindurchgeführt ist und der Anlagekörper (7.1, 7.2, 7.3, 7.4) der Deckendurchführungsvorrichtung (1.1, 1.2, 1.3, 1.4) mit der Anlagefläche (8) an einer der Geschossdecke (2) zugewandten oberen Flachseite (21) der Schalung (16) angelegt ist;
- Anschließen einer ersten Anschlussrohrleitung an den ersten Anschlussabschnitt (4) der Deckendurchführungsvorrichtung (1.1, 1.2, 1.3, 1.4) und/oder Anschließen einer zweiten Anschlussrohrleitung an einen zweiten Anschlussabschnitt (5) der Deckendurchführungsvorrichtung (1.1, 1.2, 1.3, 1.4);
- Umgießen der Deckendurchführungsvorrichtung (1.1, 1.2, 1.3, 1.4) im Ausnehmungsbereich (17) mit einem feuerfesten, aushärtbaren, mineralischen Vergusswerkstoff (18);
- Entfernen der Schalung (16) nach dem Aushärten des feuerfesten, aushärtbaren, mineralischen Vergusswerkstoffs (18).

13. Installationsverfahren nach Anspruch 12, **dadurch gekennzeichnet, dass** zunächst die Anschlussrohrleitungen an die Anschlussabschnitte (4, 5) der Deckendurchführungsvorrichtung (1.1, 1.2, 1.3, 1.4) angesetzt werden und dass dann die Deckendurchführungsvorrichtung (1.1, 1.2, 1.3, 1.4) im Ausnehmungsbereich (17) mit dem feuerfesten, aushärtbaren, mineralischen Vergusswerkstoffs (18) umgossen wird.

14. Installationsverfahren nach Anspruch 12 oder 13, **dadurch gekennzeichnet, dass** zunächst die Schalung (16) angebracht wird und dass dann die Durchführungsöffnung (21) hergestellt wird.

## Claims

1. Ceiling feedthrough device (1.1, 1.2, 1.3, 1.4), prefabricated ex works, for a storey ceiling (2), comprising a pipeline (3.1, 3.2, 3.3, 3.4) having a first connecting portion (4) and having a second connecting portion (5), comprising a sound insulation medium which encloses the pipeline (3.1, 3.2, 3.3, 3.4) in portions and/or a thermal insulation medium which encloses the pipeline (3.1, 3.2, 3.3, 3.4) in portions and/or a fire retardant medium assigned to the pipeline (3.1, 3.2, 3.3, 3.4), the sound insulation medium and/or the thermal insulation medium and/or the fire retardant medium being arranged between the first connecting portion (4) and the second connecting portion (5) in terms of a longitudinal extension direction (6) of the pipeline (3.1, 3.2, 3.3, 3.4), and comprising a contact body (7.1, 7.2, 7.3, 7.4), enclosing the pipeline (3.1, 3.2, 3.3, 3.4) between the first connecting portion (4) and the second connecting portion (5) and having a planar contact face (8) facing the first connecting portion (4), the contact body (7.1, 7.2, 7.3, 7.4) being formed from a fireproof material and preferably from a mineral fireproof material, **characterised in that** a mounting rail (9) is provided, which is orientated in the longitudinal extension direction (6) of the pipeline (3.1, 3.2, 3.3, 3.4) and on which the pipeline (3.1, 3.2, 3.3, 3.4) and/or the sound insulation medium and/or the thermal insulation medium and/or the fire-retardant medium and/or the contact body (7.1, 7.2, 7.3, 7.4) are held.

2. Ceiling feedthrough device (1.1, 1.2, 1.3, 1.4) according to claim 1, **characterised in that** the mounting rail (9) is formed from a metal material and/or configured in two parts and/or arranged parallel to the pipeline (3.1, 3.2, 3.3, 3.4).

3. Ceiling feedthrough device (1.1, 1.2, 1.3, 1.4) according to claim 2, **characterised in that** a first mounting rail part (9.1) of the mounting rail (9) and a second mounting rail part (9.2) of the mounting rail (9) are provided spaced apart from one another and **in that** a safety fuse (10) of a non-fireproof material is provided between the first mounting rail part (9.1) and the second mounting rail part (9.2).

4. Ceiling feedthrough device (1.1, 1.2, 1.3, 1.4) according to claim 3, **characterised in that** the safety fuse (10) is provided at the level of the sound insulation medium and/or the thermal insulation medium and/or the fire-retardant medium in terms of the longitudinal extension direction (6) of the pipeline (3.1, 3.2, 3.3, 3.4), and/or **in that** a safety sleeve (11) which tumesces under the effect of heat and/or a sealable ventilation flap (12) are provided as a fire-retardant medium.

5. Ceiling feedthrough device (1.1, 1.2, 1.3, 1.4) according to any of claims 1 to 4, **characterised in that** the contact face (8) of the contact body (7.1, 7.2, 7.3, 7.4) is orientated perpendicular to the longitudinal extension direction (6) of the pipeline (3.1, 3.2, 3.3, 3.4), and/or **in that** the contact body (7.1, 7.2, 7.3, 7.4) encloses the sound insulation medium and/or the thermal insulation medium and/or the fire-retardant medium at least in portions.

6. Ceiling feedthrough device (1.1, 1.2, 1.3, 1.4) according to any of claims 1 to 5, **characterised in that** a mineral wool casing (13) and in particular a rock wool casing is provided as a sound insulation medium and/or as a thermal insulation medium and/or as a fire-retardant medium.

7. Ceiling feedthrough device (1.1, 1.2, 1.3, 1.4) according to any of claims 1 to 6, **characterised in that** the pipeline (3.1, 3.2, 3.3, 3.4) is formed as a wastewater pipeline (3.1) and/or as a ventilation pipeline (3.2) and/or as a domestic water pipeline (3.3) and/or as a rainwater pipeline (3.4) and/or as a heating inflow pipeline and/or as a heating return pipeline.

8. Installation arrangement, in particular for a multi-storey residential building having single-storey flats, comprising a ceiling feedthrough device (1.1, 1.2, 1.3, 1.4) according to any of claims 1 to 7, comprising a first connecting pipeline connected to the first connecting portion (4) of the ceiling feedthrough device (1.1, 1.2, 1.3, 1.4) and comprising a second connecting pipeline connected to the second connecting portion (5) of the ceiling feedthrough device (1.1, 1.2, 1.3, 1.4), the ceiling feedthrough device (1.1, 1.2, 1.3, 1.4) being arranged in a recess region (17) of the storey ceiling (2) in such a way that the contact face (8) of the contact body (7.1, 7.2, 7.3, 7.4) of the ceiling feedthrough device (1.1, 1.2, 1.3, 1.4) is arranged flush-mounted with an underside (19) of the storey ceiling (2), and a fireproof, curable mineral casting material (18) being cast around the ceiling feedthrough device (1.1, 1.2, 1.3, 1.4) in the recess region (17) of the storey ceiling (2), and being brought up against the storey ceiling (2) and, when cured, fixing the ceiling feedthrough device (1.1, 1.2, 1.3, 1.4) relative to the storey ceiling (2) on said storey ceiling.

9. Installation arrangement according to claim 8, **characterised in that** the fireproof, curable mineral casting material (18) encloses the sound insulation medium and/or the thermal insulation medium and/or the fire-retardant medium at least in portions.

10. Installation arrangement according to either claim 8 or claim 9, **characterised in that** the ceiling feedthrough device (1.1, 1.2, 1.3, 1.4) comprises a mounting rail (9) and/or **in that** the mounting rail (9) are fastened to a building wall (22) via fastening means.

11. Installation arrangement according to any of claims 8 to 10, **characterised in that**, in the manner of a register, at least two ceiling feedthrough device (1.1, 1.2, 1.3, 1.3, 1.4) are arranged adjacent to one another and connected to corresponding connecting pipelines, the at least second ceiling feedthrough device (1.1, 1.2, 1.3, 1.4) being arranged in a shared recess region (17), and the fireproof, curable mineral casting material (18) being jointly cast around said second device.

12. Installation method for an installation arrangement according to any of claims 8 to 11, comprising the following steps:
- producing a recess region (17) as a ceiling clearance in an existing storey ceiling (2);
- applying a formwork (16), which covers the recess region (17), to an underside (19) of the storey ceiling (2);
- producing a through-opening (20) at the formwork (16);
- inserting a ceiling feedthrough device according to any of claims 1 to 7 into the recess region (17), in such a way that the first connecting portion (4) of the ceiling feedthrough device (1.1, 1.2, 1.3, 1.4) is fed through the feedthrough opening (20), and the contact face (8) of the contact body (7.1, 7.2, 7.3, 7.4) of the ceiling feedthrough device (1.1, 1.2, 1.3, 1.4) is applied to an planar upper face (21), facing the storey ceiling (2), of the formwork (16);
- connecting a first connecting pipeline to the first connecting portion (4) of the ceiling feedthrough device (1.1, 1.2, 1.3, 1.4) and/or connecting a second connecting pipeline to the second connecting portion (5) of the ceiling feedthrough device (1.1, 1.2, 1.3, 1.4);
- casting a fireproof, curable mineral casting material (18) around the ceiling feedthrough device (1.1, 1.2, 1.3, 1.4) in the recess region (17);
- removing the formwork (16) after the fireproof, curable mineral casting material (18) has cured.

13. Installation method according to claim 12, **characterised in that** the connecting pipelines are initially placed on the connecting portions (4, 5) of the ceiling feedthrough device (1.1, 1.2, 1.3, 1.4), and **in that** the fireproof, curable mineral casting material (18) is subsequently cast around the ceiling feedthrough device (1.1, 1.2, 1.3, 1.4) in the recess region (17).

14. Installation method according to either claim 12 or claim 13, **characterised in that** the formwork (16) is initially applied and **in that** the through-opening (21) is subsequently produced.

## Revendications

1. Dispositif de traversée de plafond (1.1, 1.2, 1.3, 1.4) préfabriqué en usine pour un plafond d'étage (2), comprenant une conduite (3.1, 3.2, 3.3, 3.4) avec une première section de raccordement (4) et avec une deuxième section de raccordement (5), comprenant un moyen d'isolation acoustique entourant certaines sections de la conduite (3.1, 3.2, 3.3, 3.4) et/ou un moyen d'isolation thermique entourant certaines sections de la conduite (3.1, 3.2, 3.3, 3.4) et/ou un moyen de protection contre le passage du feu associé à la conduite (3.1, 3.2, 3.3, 3.4), le moyen d'isolation acoustique et/ou le moyen d'isolation thermique et/ou le moyen de protection contre le passage du feu étant disposés, par rapport à une direction d'extension longitudinale (6) de la conduite (3.1, 3.2, 3.3, 3.4), entre la première section de raccordement (4) et la deuxième section de raccordement (5), et comprenant un corps d'appui (7.1, 7.2, 7.3, 7.4) entourant la conduite (3.1, 3.2, 3.3, 3.4) entre la première section de raccordement (4) et la deuxième section de raccordement (5), avec une surface d'appui (8) plane, tournée vers la première section de raccordement (4), le corps d'appui (7.1, 7.2, 7.3, 7.4) étant formé d'un matériau résistant au feu et de préférence d'un matériau résistant au feu minéral, **caractérisé en ce qu'**un rail de montage (9) orienté dans la direction d'extension longitudinale (6) de la conduite (3.1, 3.2, 3.3, 3.4) est prévu, sur lequel sont maintenus la conduite (3.1, 3.2, 3.3, 3.4) et/ou le moyen d'isolation acoustique et/ou le moyen d'isolation thermique et/ou le moyen de protection contre le passage du feu et/ou le corps d'appui (7.1, 7.2, 7.3, 7.4).

2. Dispositif de traversée de plafond (1.1, 1.2, 1.3, 1.4) selon la revendication 1, **caractérisé en ce que** le rail de montage (9) est formé d'un matériau métallique et/ou est réalisé en deux parties et/ou est disposé parallèlement à la conduite (3.1, 3.2, 3.3, 3.4).

3. Dispositif de traversée de plafond (1.1, 1.2, 1.3, 1.4) selon la revendication 2, **caractérisé en ce qu'**une première partie de rail de montage (9.1) du rail de montage (9) et une deuxième partie de rail de montage (9.2) du rail de montage (9) sont prévues à distance l'une de l'autre et **en ce qu'**entre la première partie de rail de montage (9.1) et la deuxième partie de rail de montage (9.2) est prévu un fusible (10) en un matériau non résistant au feu.

4. Dispositif de traversée de plafond (1.1, 1.2, 1.3, 1.4) selon la revendication 3, **caractérisé en ce que** le fusible (10), par rapport à la direction d'extension longitudinale (6) de la conduite (3.1, 3.2, 3.3, 3.4), est prévu à la hauteur du moyen d'isolation acoustique et/ou du moyen d'isolation thermique et/ou du moyen de protection contre le passage du feu et/ou **en ce qu'**une manchette de sécurité (11) qui se gonfle sous l'effet de la chaleur et/ou un clapet de ventilation (12) pouvant être fermé est prévu(e) comme moyen de protection contre le passage du feu.

5. Dispositif de traversée de plafond (1.1, 1.2, 1.3, 1.4) selon l'une des revendications 1 à 4, **caractérisé en ce que** la surface d'appui (8) du corps d'appui (7.1, 7.2, 7.3, 7.4) est orientée perpendiculairement à la direction d'extension longitudinale (6) de la conduite (3.1, 3.2, 3.3, 3.4) et/ou **en ce que** le corps d'appui (7.1, 7.2, 7.3, 7.4) entoure au moins certaines sections du moyen d'isolation acoustique et/ou du moyen d'isolation thermique et/ou du moyen de protection contre le passage du feu.

6. Dispositif de traversée de plafond (1.1, 1.2, 1.3, 1.4) selon l'une des revendications 1 à 5, **caractérisé en ce qu'**une enveloppe en laine minérale (13) et en particulier une enveloppe en laine de roche est prévue comme moyen d'isolation acoustique et/ou comme moyen d'isolation thermique et/ou comme moyen de protection contre le passage du feu.

7. Dispositif de traversée de plafond (1.1, 1.2, 1.3, 1.4) selon l'une des revendications 1 à 6, **caractérisé en ce que** la conduite (3.1, 3.2, 3.3, 3.4) est réalisée sous la forme d'une conduite d'eau usée (3.1) et/ou d'une conduite de ventilation (3.2) et/ou d'une conduite d'eau potable (3.3) et/ou d'une conduite d'eau de pluie (3.4) et/ou d'une conduite d'aller de chauffage et/ou d'une conduite de retour de chauffage.

8. Agencement d'installation, en particulier pour un immeuble d'habitation à plusieurs étages avec des appartements, comprenant un dispositif de traversée de plafond (1.1, 1.2, 1.3, 1.4) selon l'une des revendications 1 à 7, comprenant une conduite de raccordement reliée à la première section de raccordement (4) du dispositif de traversée de plafond (1.1, 1.2, 1.3, 1.4) et comprenant une deuxième conduite de raccordement reliée à la deuxième section de raccordement (5) du dispositif de traversée de plafond (1.1, 1.2, 1.3, 1.4), le dispositif de traversée de plafond (1.1, 1.2, 1.3, 1.4) étant disposé dans une zone d'évidement (17) du plafond d'étage (2) de telle sorte que la surface d'appui (8) du corps d'appui (7.1, 7.2, 7.3, 7.4) du dispositif de traversée de plafond (1.1, 1.2, 1.3, 1.4) soit disposée à fleur d'une face inférieure (19) du plafond d'étage (2), et le dispositif de traversée de plafond (1.1, 1.2, 1.3, 1.4) étant enrobé, dans la zone d'évidement (17) du plafond d'étage (2), d'un matériau de scellement (18) minéral, durcissable et résistant au feu, qui est amené jusqu'au plafond d'étage (2) et qui, à l'état durci, fixe le dispositif de traversée de plafond (1.1, 1.2, 1.3, 1.4) par rapport au plafond d'étage (2) sur ce dernier.

9. Agencement d'installation selon la revendication 8, **caractérisé en ce que** le matériau de scellement (18) minéral, durcissable et résistant au feu, entoure au moins certaines sections du moyen d'isolation acoustique et/ou du moyen d'isolation thermique et/ou du moyen de protection contre le passage du feu.

10. Agencement d'installation selon la revendication 8 ou 9, **caractérisé en ce que** le dispositif de traversée de plafond (1.1, 1.2, 1.3, 1.4) comprend un rail de montage (9) et/ou **en ce que** le rail de montage (9) est fixé à un mur de bâtiment (22) par des moyens de fixation.

11. Agencement d'installation selon l'une des revendications 8 à 10, **caractérisé en ce que**, à la manière d'un registre, au moins deux dispositifs de traversée de plafond (1.1, 1.2, 1.3, 1.4) sont disposés au voisinage l'un de l'autre et reliés à des conduites de raccordement correspondantes, lesdits au moins deux dispositifs de traversée de plafond (1.1, 1.2, 1.3, 1.4) étant disposés dans une zone d'évidement commune (17) et étant enrobés en commun avec le matériau de scellement (18) minéral, durcissable et résistant au feu.

12. Procédé d'installation d'un agencement d'installation selon l'une des revendications 8 à 11, comprenant les étapes suivantes:
- réalisation d'une zone d'évidement (17) en tant que traversée de plafond dans un plafond d'étage existant (2);
- mise en place d'un coffrage (16) recouvrant la zone d'évidement (17) sur une face inférieure (19) du plafond d'étage (2);
- réalisation d'une ouverture de passage (20) sur le coffrage (16);
- insertion d'un dispositif de traversée de plafond selon l'une des revendications 1 à 7 dans la zone d'évidement (17) de telle sorte que la première section de raccordement (4) du dispositif de traversée de plafond (1.1, 1.2, 1.3, 1.4) soit passée à travers l'ouverture de passage (20) et que le corps d'appui (7.1, 7.2, 7.3, 7.4) du dispositif de traversée de plafond (1.1, 1.2, 1.3, 1.4) soit appliqué avec la surface d'appui (8) contre un côté plat supérieur (21) du coffrage (16) tourné vers le plafond d'étage (2);
- raccordement d'une première conduite de raccordement à la première section de raccordement (4) du dispositif de traversée de plafond (1.1, 1.2, 1.3, 1.4) et/ou raccordement d'une deuxième conduite de raccordement à une deuxième section de raccordement (5) du dispositif de traversée de plafond (1.1, 1.2, 1.3, 1.4);
- enrobage du dispositif de traversée de plafond (1.1, 1.2, 1.3, 1.4) dans la zone d'évidement (17) avec un matériau de scellement minéral, durcissable et résistant au feu (18);
- enlèvement du coffrage (16) après le durcissement du matériau de scellement minéral, durcissable et résistant au feu (18).

13. Procédé d'installation selon la revendication 12, **caractérisé en ce que** les conduites de raccordement sont d'abord mises en place sur les sections de raccordement (4, 5) du dispositif de traversée de plafond (1.1, 1.2, 1.3, 1.4) et **en ce que** le dispositif de traversée de plafond (1.1, 1.2, 1.3, 1.4) est ensuite enrobé dans la zone d'évidement (17) avec le matériau de scellement minéral, durcissable et résistant au feu (18).

14. Procédé d'installation selon la revendication 12 ou 13, **caractérisé en ce que** le coffrage (16) est d'abord mis en place et **en ce que** l'ouverture de passage (21) est ensuite réalisée.
